# EUROPEAN PATENT SPECIFICATION

(11) **EP 1 886 606 B1**
(45) Date of publication and mention of the grant of the patent: **01.04.2009**
(21) Application number: 06016403.5
(22) Date of filing: 07.08.2006
(51) Int. Cl.: A47J 37/06, A47J 37/07

(54) **Smokeless barbecue grill**
Rauchloser Barbecue Grill
Gril de barbecue sans fumée

(43) Date of publication of application: 13.02.2008
(73) Proprietor: Grand Hall Enterprise Co., Ltd., Neihu, Taipei (TW)
(72) Inventor: Home, William, 48 Regent St.,Cambridge CB2 1FD (GB)
(74) Representative: Horak, Michael

(56) References cited:
- EP-A- 1 444 933
- GB-A- 2 286 111

## Description

### CROSS-REFERENCE

This application is related to the U.S. patent application, Serial No. 11/268,539, filed November 8, 2005, now abandoned.

### BACKGROUND OF THE INVENTION

### (a) Field of the Invention

The present invention relates to a smokeless barbeque grill, and in particular to one which utilizes infrared ray to heat the food on the grate and a water basin to produce water vapor to add moisture to the food thereby making it juicy and delicious to eat.

### (b) Brief Description of the Prior Art

Ever since mankind's realization of how to control fire for the purposes of providing heat and light, the cooking behavior of grilling food has continuously become popularized along with the historical development of human beings. Even with the availability of the electric grill, inconvenience remains as a main issue when trying to grill meat and other foods, where the total grilling time has to be set in advance and the accuracy of the time set relies mostly from past grilling experiences. As the electric grill does not allow people to frequently open it to check the cooking status of the food, most people prefer using conventional charcoal grills, with an open grilling space provided on the top of the upper grate of the grill. When using the conventional charcoal grill for grilling, the fat from the food and the BBQ sauce poured onto the meat, drips through the grate easily, which puts out the burned charcoal briquettes - lowering the heat necessary to cook food - and further creates smoke - mixed with the gas of oil and ashes - that is harmful to the human respiratory system and also causes environmental problems.

As commonly known, the charcoal briquettes, when burned, will transform into embers radiating the heat and providing the highest grilling efficiency and the highest heat temperature right above it Even when placing the charcoal briquettes away from the center of the grill to prevent the dripping of fat from the food or BBQ sauce from spilling onto the briquettes, the flame created from burning the charcoal briquettes still rises from the center of the grill, and fails to effectively cook the food that is off to the side or off-center. It is unavoidable to place the charcoal briquettes right beneath the grilling food when using the charcoal grill. Thus, when using the conventional charcoal grill, the resulted grilling smoke inevitably contaminates the grilled food, environment and also creates harmful effects to the human respiratory systems.

Some people think that the smoke - created from the burning of the charcoal - added to the skin of the meats make the grilled meat taste better, as the smoke makes its skin crispy. Nonetheless, this viewpoint is not appropriate. The food itself can be tasty when grilled with appropriate fire control; the tastiness of the food should not unnecessarily rely on the smoke added to its skin. Moreover, people nowadays are aware of the fact that the smoke of charcoal contains small amount of carcinogenic substances. Grilling food with higher exposure to the smoke does more harm to the human body The problem of the grilling smoke is, thus, not just a matter of personal preferences, it relates further to the problem of a healthy diet, and should be eliminated.

EP-A-1444 933 discloses a cooking apparatus which comprises: a body provided in a top thereof with an opening; at least one heating unit arranged in the body; a grill unit mounted on a top of the body; and at least one heat reflecting unit having at least one plate and arranged toward the at least one heating unit below the opening of the body, wherein the at least one heating unit is arranged outside a region under an effective grill portion of the grill unit on which food is placed, and wherein the at least on heating reflecting unit comprises a plurality of reflecting plates provided above the at least one plate and under a center portion of the grill unit. However, the cooking apparatus according to EP-A-1 444 933 will be very high in temperature when in use, thereby causing danger to the user. Further, the food cooked on the grate is too dried and hard to eat. Furthermore, the heat from the burners cannot be evenly distributed to the top of the grate.

Therefore, it is an object of the present invention to provide an improvement in the structure of a barbecue grill which can obviate and mitigate the above-mentioned drawbacks.

### SUMMARY OF THE INVENTION

This invention is related to an improvement in the structure of a barbecue grill.

It is the primary object of the present invention to provide an infrared barbecue grill wherein heat is evenly distributed on the top of the grate.

It is another object of the present invention to provide an infrared barbecue grill which can prevent the user from direct heating from the infrared burner.

It is a further object of the present invention to provide an infrared barbecue grill which has a water basin for adding moisture to the food on the grate thereby making the food juicy and delicious to eat.

According to the preferred embodiment of the present invention, there is provided an infrared barbecue grill which includes a body having an open top, the body having an interior with an inner front side and an inner rear side, a first infrared burner arranged at the inner front side, a second infrared burner arranged at the inner rear side and located opposite to the first infrared burner, a first shield member mounted above the first infrared burner and having a plurality of through holes, the first shield member having an inner edge mounted on the inner front side of the body and an outer edge suspended from the inner front side of the body, a first baffle having a first edge fixedly installed on the outer edge of the first shield and a second edge having a distance from the first shield member, a second shield member mounted above the second infrared burner and having a plurality of through holes, the second shield member having an inner edge mounted on the inner rear side of the body and an outer edge suspended from the inner rear side of the body, a second baffle having a first edge fixedly installed on the outer edge of the second shield and a second edge having a distance from the second shield member, a grate configured to be placed on the open top of the body, a heat dissipator arranged on a bottom of the body and formed with a plurality of through holes, and a water basin slidably mounted under the heat dissipater, whereby the baffles will guide the heat through the holes thereon to the region of the grate where the infrared ray emitted from the infrared burners cannot cover, the lug will prevent the rear infrared burner from emitting infrared rays directly to the user, and the water basin will provide water vapor to add moisture to the food on the grate thereby making the food juicy and delicious to eat.

The foregoing object and summary provide only a brief introduction to the present invention. To fully appreciate these and other objects of the present invention as well as the invention itself, all of which will become apparent to those skilled in the art, the following detailed description of the invention and the claims should be read in conjunction with the accompanying drawings. Throughout the specification and drawings identical reference numerals refer to identical or similar parts.

Many other advantages and features of the present invention will become manifest to those versed in the art upon making reference to the detailed description and the accompanying sheets of drawings in which a preferred structural embodiment incorporating the principles of the present invention is shown by way of illustrative example.

### BRIEF DESCRIPTION OF THE DRAWINGS

FIG 1 is a perspective view of an infrared barbecue grill according to the present invention;
FIG 2 is a perspective view of the infrared barbecue grill according the present invention, with the lid opened;
FIG 3 is an exploded view of the infrared barbecue grill according to the present invention;
FIG 4 is a sectional view of the infrared barbecue grill according to the present invention;
FIG SA is an enlarged view of the portion A of FIG 3;
FIG 5B is an enlarged view of the portion B of FIG 3; and
FIG 6 is a perspective view of another preferred embodiment of the present invention.

### DETAILED DESCRIPTION OF THE PREFERRED EMBODIMENT

The following descriptions are of exemplary embodiments only, and are not intended to limit the scope, applicability or configuration of the invention in any way. Rather, the following description provides a convenient illustration for implementing exemplary embodiments of the invention. Various changes to the described embodiments may be made in the function and arrangement of the elements described without departing from the scope of the invention as set forth in the appended claims.

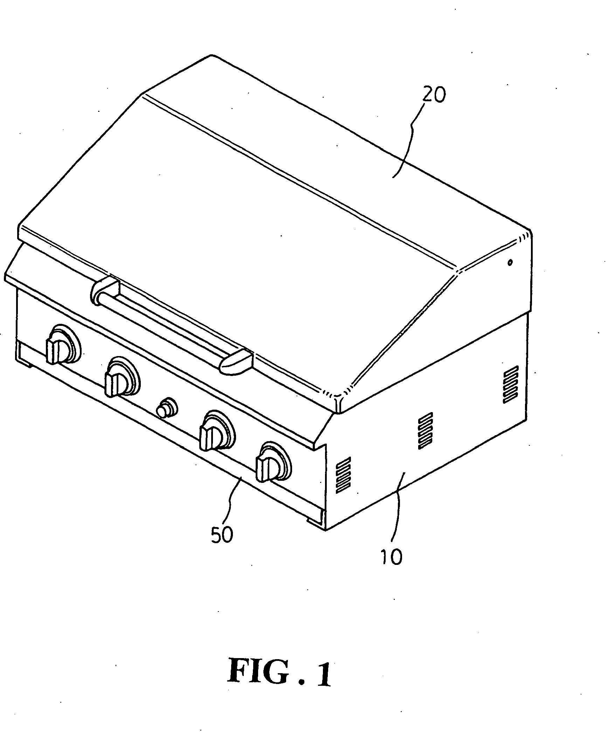

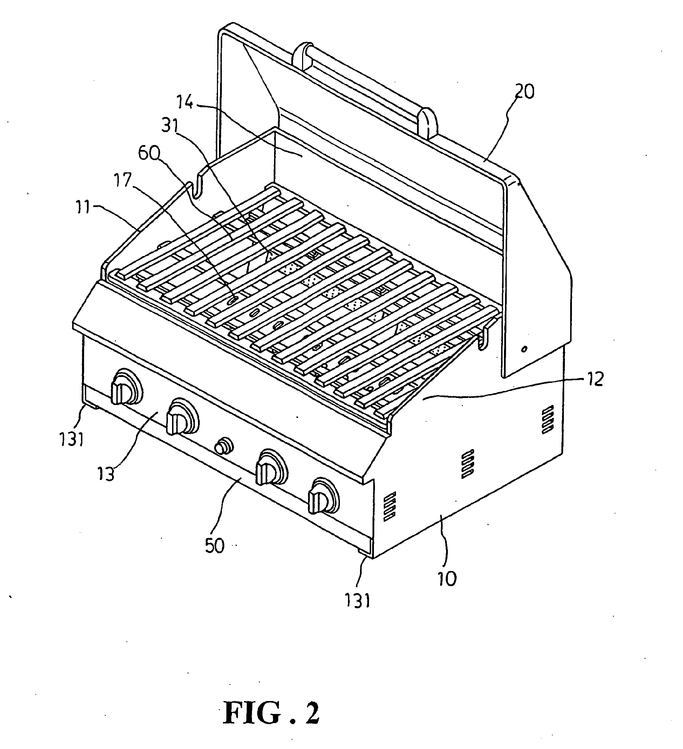

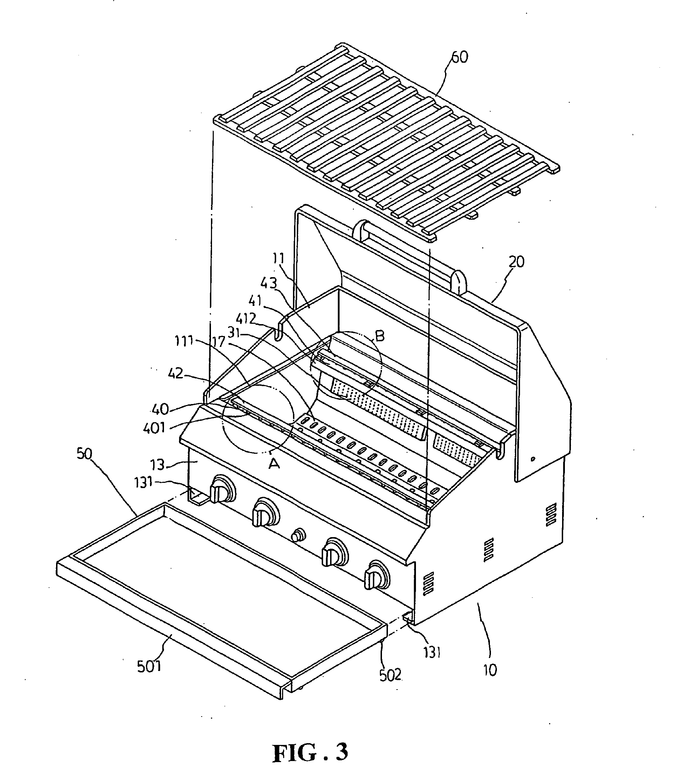

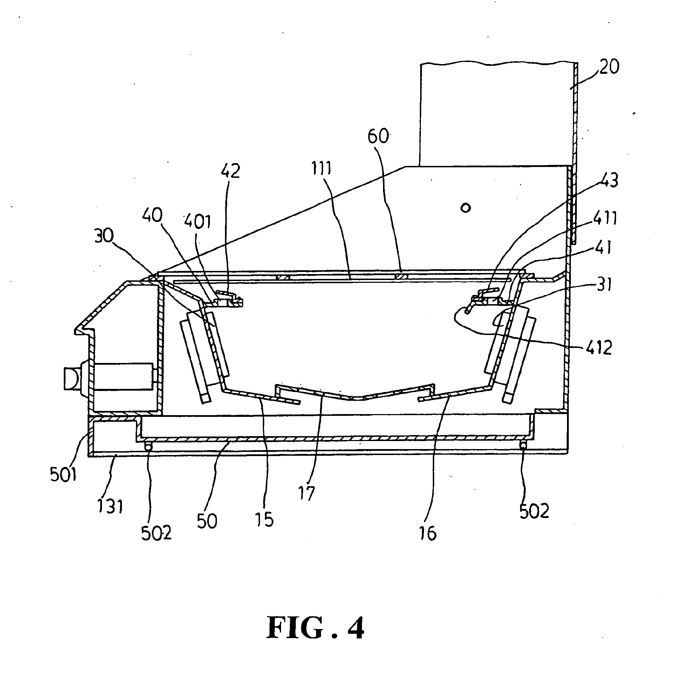

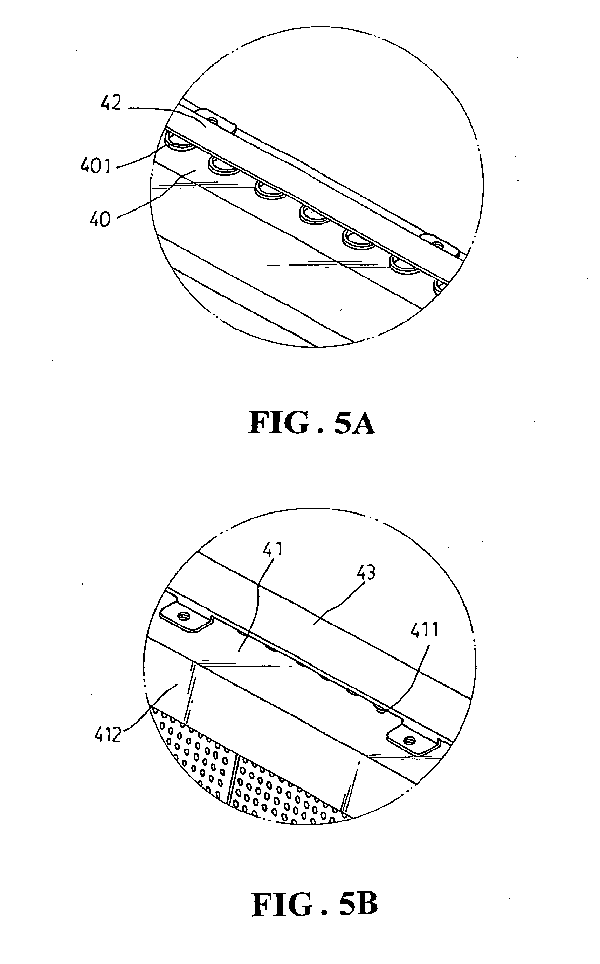

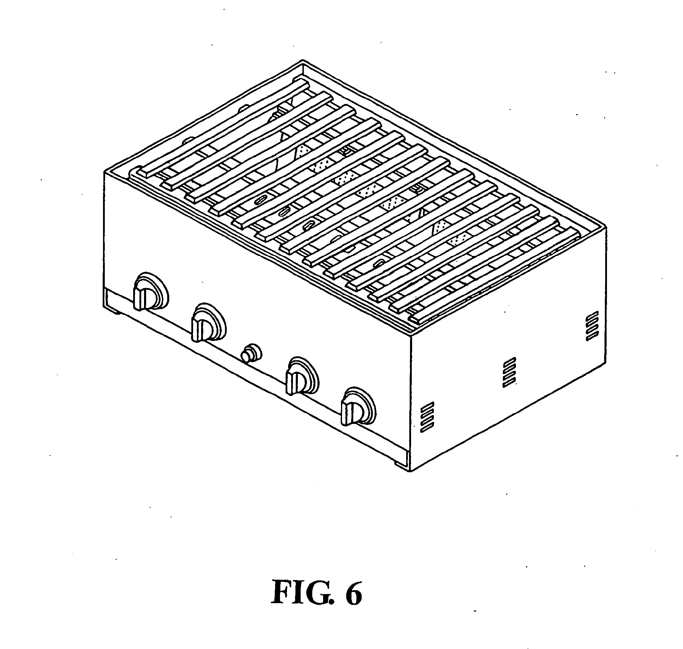

Referring to FIGS. 1, 2 and 3, the infrared barbecue grill according to the present invention generally comprises a body 10, a lid 20, at least two infrared burners 30, two shield members 40 and 41, a water basin 50 and a grate 60. The body has a front panel 13 on which are mounted control knobs (shown but not numbered), a raised back panel 14, and two slanted side panels 11 and 12 connecting the raised back panel 14 and the front panel 13. The body 10 is open at the top and the lid 20 is pivotally connected with two side panels 11 and 12 of the body 10 for closing the open top. The open top of the body 10 is provided at two inner sides with two elongated members 111 for supporting the grate 60. As shown in FIGS. 4 and 5, the front and rear infrared burners 30 and 31 are oppositely arranged at the front and rear sides of the interior of the body 10 and are fastened to the side panels 11 and 12 of the body 10. The front and rear infrared burners 30 and 31 are arranged so that the emitting sides of the burner 30 and 31 are slantingly facing the central portion of the bottom of the grate 60. The infrared burners 30 and 31 are mounted outside an effective cooking portion of the grate 60 so that the oil, sauce and the like separated from the food will not drip onto the burners 30 and 31. Above the burners 30 and 31 there are arranged the first and second shield members 40 and 41 which are mounted across the two side panels 11 and 12 of the body 10. The shield members 40 and 41 are respectively provided with a plurality of through holes 401 and 411 which may be of any desired shape. The outer edge of a first baffle 42 is fixedly installed on the outer edge of the first shield member 40. The inner edge of the first baffle 42 has a distance from the first shield member 40 thereby guiding the heat energy generated from the infrared burner 30 to flow to the front side of the grate 60. Similarly, the outer edge of a second baffle 43 is fixedly installed on the outer edge of the second shield member 41, and the inner edge of the second baffle 42 has a distance from the second shield member 41 thereby guiding the heat energy generated from the infrared burner 31 to flow to the rear side of the grate 60. As a consequence, the baffles 42 and 43 will guide the heat through the holes to the region of the grate 60 where the infrared ray emitted from the infrared burners 30 and 31 cannot cover and so heat can be evenly distributed on the top surface of the grate 60. The second shield member 41 at the rear side is formed with a downwardly extending lug 412 for preventing the user from direct heating from the infrared burner 31. The bottom of the body 10 has two opposite shoulder portions 15 and 16 between which there is an opening. A heat dissipator 17 is mounted across the two shoulder portions 15 and 16 for lowering the temperature of the oil and/or sauce separated from the food on the grate 60. The heat dissipator 17 is formed with a plurality of holes for the passage of oil and/or sauce. The water basin 50 which is provided with a front side 501 and rollers 502 is slidably fitted at the lower portion of the body 10 and located under the heat dissipator 17 for receiving the oil and/or sauce dropping through the holes of the heat dissipator 17. FIG 6 illustrates another preferred embodiment of the present invention, wherein the barbecue grill has a flat top and does not have a lid.

By means of the infrared barbecue grill according to the present invention, the burners 30 and 31 are arranged at angular positions under the front and rear sides of the grate 60 thereby concentrating the heat generated from the burners 30 and 31 to the food placed on the grate 60. The holes 401 and 411 of the shield members 40 and 41 enable the heat generated from the burners 30 and 31 to flow upwardly therethrough, and the baffles 42 and 43 are designed to guide the heat passing through the holes 401 and 411 to the front and rear sides of the grate 60 thereby evenly distributing heat energy to the top surface of the grate 60 and therefore making it more convenient to use. Furthermore, the baffles 42 and 43 of the shield members 40 and41 can prevent the oil and/or sauce separated from the food from dripping onto the burners 30 and 31.

Moreover, the water in the water basin 50 will be evaporated when the barbecue grill is in use, thereby adding moisture the food being cooked on the grate 60 and therefore making it juicy and delicious to eat.

## Claims

1. An infrared barbecue grill comprising:
a body (10) having an open top, said body (10) having an interior with an inner front side and an inner rear side;
a first infrared burner (30) arranged at said inner front side;
a second infrared burner (31) arranged at said inner rear said and located opposite to said first infrared burner (30);
a grate (60) configured to be placed on said open top of said body (10);
**characterized in that:** a first shield member (40) is mounted above said first infrared burner and having a plurality of through holes (401), said first shield member (40) having an inner edge mounted on said inner front side of said body (10) and an outer edge suspended from said inner front side of said body (10); a first baffle (42) having a first edge fixedly installed on said outer edge of said first shield member (40) and a second edge having a distance from said first shield member (40); a second shield member (41) mounted above said second infrared burner (31) and having a plurality of through holes (411), said second shield member (41) having an inner edge mounted on said inner rear side of said body (10) and an outer edge suspended from said inner rear side of said body (10); a second baffle (43) having a first edge fixedly installed on said outer edge of said second shield member (41) and a second edge having a distance from said second shield member (41); a heat dissipator (17) arranged on a bottom of said body (10) and formed with a plurality of through holes; and a water basin (50) slidably mounted under said heat dissipator (17).

2. The infrared barbecue grill as claimed in claim 1, wherein said second shield member (41) has a lug (412) extending downwardly from said outer edge of said second shield member (41).

3. The infrared barbecue grill as claimed in claim 1, wherein said infrared burners (30) and (31) are mounted outside an effective cooking portion of said grate (60).

4. The infrared barbecue grill as claimed in claim 1, wherein said infrared burners (30) and (31) are arranged at an angular position, facing against a central portion of said grate (60).

5. The infrared barbecue grill as claimed in claim 1, wherein said first and second shield members (40) and (41) are integrally formed with said inner front and inner rear sides of said body (10).

6. The infrared barbecue grill as claimed in claim 1, wherein said first baffle (42) and second baffle (43) are integrally formed with said first and second shield members (40) and (41) respectively.

7. The infrared barbecue grill as claimed in claim 1, wherein said body (10) has a front panel (13) provided with control knobs.

## Patentansprüche

1. Ein Infrarotgrill bestehend aus:
einem oben offenen Körper (10), der innen eine vordere und eine hintere Seite hat;
einem ersten Infrarotstrahler (30) nahe der vorderen Seite;
einem zweiten Infrarotstrahler (31) nahe der hinteren Seite und dem ersten Infrarotstrahler (30) gegenüberliegend;
einem Rost (60) zur Anbringung auf der oberen Öffnung des Körpers (10);
welcher **dadurch gekennzeichnet ist, daß**
ein erstes Abschirmblech (40) mit einer Anzahl Löcher (401) mit einer äußeren Kante an der vorderen inneren Seite des Körpers (10) oberhalb des ersten Infrarotstrahlers (30) befestigt ist und sich nach innen erstreckt;
ein erstes Leitblech (42) mit einer ersten Kante an der inneren Kante des ersten Abschirmblechs (40) befestigt ist, während seine zweite Kante einen Abstand zu dem Abschirmblech (40) hat;
ein zweites Abschirmblech (41) mit einer Anzahl Löcher (411) mit einer äußeren Kante an der hinteren inneren Seite des Körpers (10) oberhalb des zweiten Infrarotstrahlers (31) befestigt ist und sich nach innen erstreckt;
ein zweites Leitblech (43) mit einer ersten Kante an der inneren Kante des zweiten Abschirmblechs (41) befestigt ist, während seine zweite Kante einen Abstand zu dem Abschirmblech (41) hat;
ein Wärmeverteiler (17) mit einer Anzahl Löcher unten in dem Körper (10) angebracht ist;
unter dem Wärmeverteiler (17) eine Wasserschale verschiebbar angebracht ist.

2. Der Infratrotgrill aus Anspruch 1, bei dem an der inneren Kante des zweiten Abschirmblechs (41) ein schräg nach innen unten zeigender Stirnlappen (412) angebracht ist.

3. Der Infrarotgrill aus Anspruch 1, bei dem die Infrarotstrahler (30, 31) außerhalb eines aktiven Bereichs des Rostes (60) angebracht sind.

4. Der Infrarotgrill aus Anspruch 1, bei dem die Infrarotstrahler (30, 31) unter einem Winkel angebracht sind und nach innen strahlen.

5. Der Infrarotgrill aus Anspruch 1, bei dem erstes und zweites Abschirmblech (40,41) integrale Bestandteile der inneren vorderen und hinteren Seite des Körpers (10) sind.

6. Der Infrarotgrill aus Anspruch 1, bei dem erstes und zweites Leitblech (42, 43) integrale Bestandteile des ersten und des zweiten Abschirmblechs (40, 41) sind.

7. Der Infrarotgrill aus Anspruch 1, bei dem an der Vorderseite des Körpers (10) ein Bedienfeld (13) angebracht ist.

## Revendications

1. Gril de barbecue à infrarouge comprenant:
Un corps (10) ayant un sommet ouvert, ledit corps (10) ayant l'intérieur avec un côté frontal et un côté arrière internes;
Un premier brûleur à infrarouge (30) disposé sur ledit côté frontal:
Un second brûleur à infrarouge (31) disposé sur ledit côté arrière et situé à l'opposé dudit brûleur à infrarouge (30);
Une grille (60) conçue pour être placée sur ledit sommet ouvert dudit corps (10);
**Caractérisé en ce que**: un premier membre bouclier (40) est monté au-dessus dudit premier brûleur à infrarouge avec une pluralité de trous (401), ledit premier membre bouclier (40) ayant un bord intérieur monté sur ledit côté frontal intérieur dudit corps (10) et un bord extérieur suspendu depuis ledit côté frontal intérieur dudit corps (10); un pemier baffle (42) ayant un premier bord installé de manière fixe sur ledit bord extérieur dudit membre bouclier (40) et un second bord à distance dudit premier membre bouclier (40); un second membre bouclier (41) monté au-dessus dudit second brûleur à infrarouge (31) et ayant une pluralité de trous (411), ledit second membre bouclier (41) ayant un bord intérieur monté sur le côté arrière intérieur dudit corps (10) et un bord extérieur suspendu depuis ledit côté arrière intérieur dudit corps (10); un second baffle (43) ayant un premier bord installé de manière fixe sur ledit bord extérieur dudit second membre bouclier (41) et un second bord à distance dudit second membre bouclier (41); un dissipateur de chaleur (17) disposé au bas dudit corps (10) et formé avec une pluralité de trous; et un bassin d'eau (50) monté sous ledit dissipateur de chaleur (17).

2. Gril de barbecue à infrarouge comme revendiqué dans la Revendication 1, où ledit second membre bouclier (41) a un train (412) s'étendant vers le bas depuis ledit bord dudit second membre bouclier (41).

3. Gril de barbecue à infrarouge comme revendiqué dans la Revendication 1, où lesdits brûleurs à infrarouge (30) et (31) sont montés sur l'extérieur d'une partie de cuisson efficace de ladite grille (60).

4. Gril de barbecue à infrarouge comme revendiqué dans la Revendication 1, où lesdits brûleurs à infrarouge (30) et (31) sont disposés sur une position anuglaire, faisant face à la partie centrale de ladite grille (60).

5. Gril de barbecue à infrarouge comme revendiqué dans la Revendication 1, où lesdits premier et second membres bouclier (40) et (41) sont formés intégralement avec lesdits côtés frontaux et arrières dudit corps (10).

6. Gril de barbecue à infrarouge comme revendiqué dans la Revendication 1, où ledit premier baffle (42) et le second baffle (43) sont formés intégralement et respectivement avec lesdits premier et second membres bouclier (40) et (41).

7. Gril de barbecue à infrarouge comme revendiqué dans la Revendication 1, où ledit corps (10) a un panneau frontal (13) équipé de boutons de contrôle.
